# EUROPEAN PATENT APPLICATION

(11) **EP 2 565 553 A1**
(43) Date of publication of application: **06.03.2013**
(21) Application number: 11306098.2
(22) Date of filing: 05.09.2011
(51) Int. Cl.: F24J 2/10, F24J 2/46

(54) **Solar energy collector comprising a washing system and washing method**

(71) Applicant: Areva Solar, Inc, Mountain View CA 94043 (US)
(72) Inventor: Hampton, Aaron, BAKERSFIELD, CA California CA 93312 (US)
(74) Representative: Jacobson, Claude

(57) **Abstract**

The solar energy collector (2) comprises :
- a receiver (4) to circulate a heat transfer fluid,
- a solar energy concentrator (6) comprising rows (8) of reflectors (10) with mirrors (14) to concentrate solar energy on the receiver (4),
- a washing system (26) for washing the reflectors (10), said washing system comprising an array of sprinklers (28), said sprinklers (28) having in-ground bodies (30) and rotary heads (32) rotative with respect to axes (A-A) extending substantially vertically, to spread washing solution on substantially all mirrors (14) of the reflectors (10).

## Description

The present invention relates to a solar energy collector of the type comprising a receiver to circulate a heat transfer fluid capable of absorbing solar radiation and a solar energy concentrator to concentrate solar energy on the receiver.

A solar energy collector may comprise a solar energy concentrator of the type comprising a Linear Fresnel Reflector (LFR) concentrator comprising rows of reflectors comprising mirrors that are arrayed in parallel side-by-side rows. The receiver typically extends parallel to the rows of reflectors and is elevated above the ground. The reflectors are mounted to a support structure with a tilting or pivoting capability, generally in north-south direction, and are driven to track the diurnal sun's motion and reflect the incident solar radiation towards the receiver. The solar energy collector may comprises one or several receivers

Solar energy collectors are generally expensive in area and located in remote environments. They are subjected to harsh outdoor environment, namely to wind and dust. Dust deposited on the reflectors drastically diminishes the efficiency of the solar energy collector.

Besides, it is desirable to have solar energy collectors that can endure for many years in harsh outdoor environment with relatively reduced operation and maintenance.

An aim of the invention is to provide a solar energy collector whose efficiency can be maintained efficiently despite outdoor aggression and with limited operation and maintenance.

To this end, the invention proposes a solar energy collector comprising :
- a receiver to circulate a heat transfer fluid,
- a solar energy concentrator comprising rows of reflectors with mirrors to concentrate solar energy on the receiver,
- a washing system for washing the reflectors, said washing system comprising an array of sprinklers, said sprinklers having in-ground bodies and rotary heads rotative with respect to axes extending substantially vertically, to spread washing solution on substantially all mirrors of the reflectors.

In other embodiments, the solar energy collector may comprise one or several of the following features, taken in isolation or in any technical feasible combination:
- it comprises external sprinklers positioned at the perimeter of the solar energy concentrator;
- the head of each external sprinkler is rotative to spread washing solution on a spreading zone in the shape of a half disc or a quarter disc;
- it comprises internal sprinklers positioned between reflectors of the solar energy concentrator;
- the head of each internal sprinkler is rotative to spread washing solution on a spreading zone in the shape of a disc;
- the spreading zone of each internal sprinkler is overlapped by the spreading zones of at least four adjacent sprinklers, namely height adjacent sprinklers;
- the sprinklers are arranged in rows;
- the sprinklers of each row are spaced such that the spreading zones overlap and the rows are interspaced such that the spreading zones of each pair of adjacent rows overlap;
- the washing solution is demineralized water.

The invention also relates to a method of washing reflectors of a solar energy collector as defined above claim, comprising the steps of:
- tilting the reflectors at an angle with respect to a horizontal plane; and
- spreading washing solution on substantially all mirrors of the reflectors with the washing system.

The invention and its advantages will be better understood on reading the following description given solely by way of example and with reference to the appended drawings in which:
- Figure 1 is a side view of a solar energy collector according to the invention; and
- Figure 2 is a partial top view of the solar energy collector.

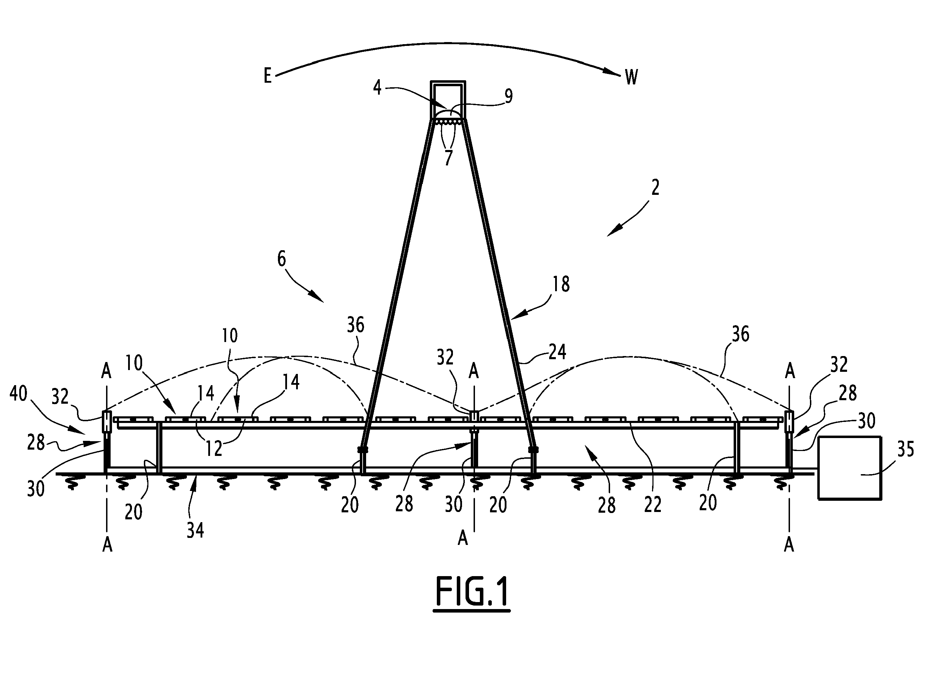

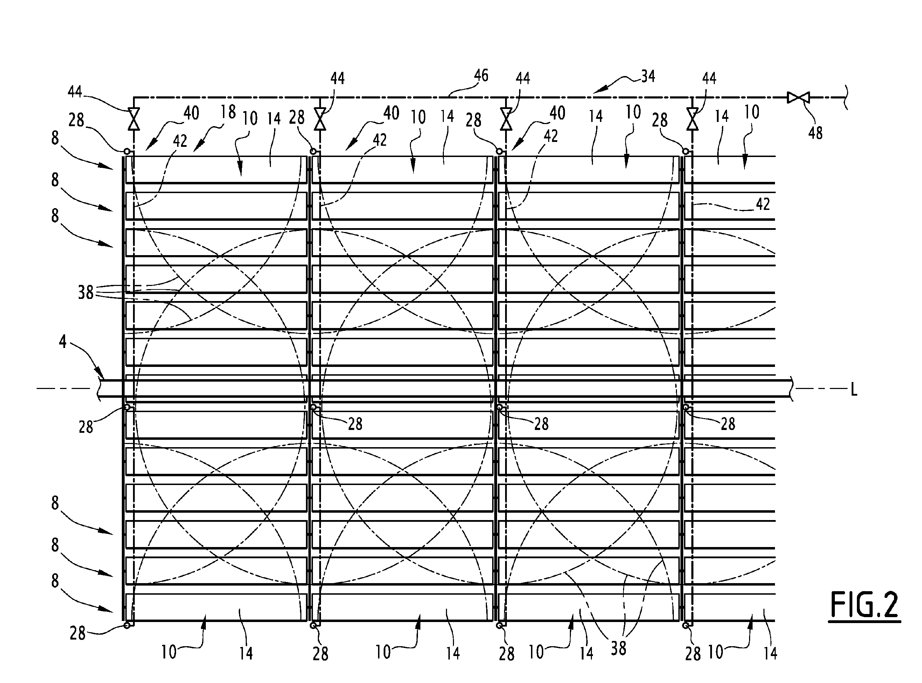

The solar energy collector 2 illustrated on Figures 1 and 2 comprises a receiver 4 for circulation of a heat transfer fluid and a solar energy concentrator 6 to concentrate solar energy on the receiver 4.

The receiver 4 is elevated above ground and extends in a longitudinal direction L (Figure 2) perpendicular to the plane of Figure 1.

In a known manner, the receiver 4 comprises a plurality of tubes 7 (Figure 1) for circulation of a heat transfer fluid. The tubes 7 extend parallel and side-by-side in the longitudinal direction L. The tubes 7 are received and supported in a trough 9 having a downwardly opening aperture for the radiation reflected by the solar energy concentrator to hit the tubes 7. The receiver 4 may have a window across the aperture.

The solar energy concentrator 6 is configured for reflecting incident solar radiations upwardly on the receiver 4.

The solar energy concentrator 6 is a LFR concentrator. The solar energy concentrator 6 comprises rows 8 of reflectors 10 extending parallel and side-by-side in the longitudinal direction L. Each row 8 comprises several reflectors 10 aligned in the longitudinal direction L.

Each reflector 10 is elongated in the longitudinal direction L and comprises a frame 12 (Figure 1) supporting one or several mirror 14 (Figure 2), here one mirror. The mirrors may be planar mirror having a planar cross section or cylindrical-parabolic mirrors having a circular arc cross-section and defining a line of focus for concentrating solar radiation on the receiver 4. The focal length may be approximately equal to the distance between each cylindrical-parabolic mirror and the receiver or longer.

The solar energy collector 2 comprises a support installation supporting the receiver 4 and the reflectors 10.

The support installation comprises support structures 18 distributed along the longitudinal direction L. Each reflector 10 extends in the span between two adjacent support structures 18 and the ends of the reflector 10 are supported on said support structures 18 with a capability of tilting or pivoting around a axis extending substantially longitudinally and horizontally

Each support structure 18 extends transversally and comprises in-ground pillars 20 and a horizontal support beam 22 and a mast 24 mounted on the pillars 20. Reflectors 10 are pivotally mounted on the support beam 20 and the receiver 4 is mounted on the mast 24 above the reflectors 10.

In a known manner, the solar energy collector 2 comprises a drive system (not shown) for driving the reflectors 10 in rotation about their respective longitudinal axis for tracking the sun's diurnal motion and reflecting the incident sun radiations towards the receiver 4. The longitudinal direction L is for example oriented north-south and the diurnal motion of the sun from east to west is illustrated by an arrow on Figure 1.

Each row 8 of reflectors 10 may comprise segment rows or reflector assemblies of several reflectors 10 connected in rotation and driven in rotation by a common drive unit. A reflector assembly may comprise 2, 4, 6 or 8 reflectors 10.

The solar energy collector 2 comprises a washing system 26 for washing the reflectors 10.

The washing system 26 comprises an array of sprinklers 28 to spread a washing solution on substantially all the mirrors of the reflectors 10 of the solar energy concentrator 6. The washing solution is advantageously demineralized water.

The sprinklers 28 have in-ground bodies 30 and movable heads 32 mounted rotationally with respect to axes A-A (Figure 1) extending substantially vertically.

Each sprinkler 28 is fluidly connected to a washing solution distribution network 34 of the washing system 26 for feeding washing solution to the sprinklers 28. The distribution network 34 comprises a washing solution source 35, e.g. a tank.

The head 32 of each sprinkler 28 is positioned substantially at the height of the mirrors 14 of the reflectors 10 or slightly above for appropriate spreading of washing solution on the mirrors 14 while not shading the mirrors 14.

The head 32 of each sprinkler 28 is adapted for spreading at least one jet 36 of washing solution, namely one single jet 36, radially with respect to the axis A-A of rotation of the head 32. Each head 32 is rotational on an angular range to spread washing solution on a spreading zone 38 (Figure 2). The spreading zones are circular in the form of a disc extending on 360° or disc portion for example a half disc extending on 180° or a quarter disc extending on 90°. Each head 32 is rotational continuously or in alternating movement. In the latter case, the head 32 make sweeps.

The sprinklers 28 are distributed in the solar energy collector 6 to spread washing solution an all the mirrors 14 of the reflectors 10.

The washing system 26 comprises internal sprinklers 28 each positioned within the field covered by the reflectors 10 of the solar energy concentrator 2, between reflectors 10. The internal sprinklers 28 have spreading zones in the shape of discs.

The washing system 26 comprises external sprinklers 28 each positioned at the perimeter of the field covered by the reflectors 10 of the solar energy concentrator 2. The external sprinklers 28 have spreading zones in the shape of half discs or quarter discs.

The sprinklers 28 are distributed such that the spreading zones of the sprinklers 28 overlap to cover substantially all the reflectors 10 of the solar energy concentrator 6.

The sprinklers 28 are arranged in a lattice comprising sprinklers rows 40 of sprinklers 28 extending parallel and side-by-side. The sprinklers 28 of each row 40 are aligned transversely to the longitudinal direction L. Each sprinkler row 40 comprises sprinklers 28 spaced such that the spreading zones 38 of the adjacent sprinklers 28 of said sprinkler row 40 overlap. The sprinklers rows 40 are interspaced such that the spreading zones 38 of sprinklers 28 of a row 40 overlap with spreading zones of sprinklers 28 of each adjacent sprinkler row 40.

The spreading zone 38 of each internal sprinkler 28 at the center of a 3x3 array of sprinklers overlaps the spreading zones of at least four adjacent sprinklers 28 of the 3x3 array, preferably height adjacent sprinklers 28 of the 3x3 array.

In the example, each sprinkler row 40 comprises three sprinklers 28 distributed over thirteen reflector rows 8. Seven reflector rows 8 are located between the central sprinkler 28 of each sprinkler row 40 and one of the two side sprinklers 28 of said sprinklers row 40, and six reflector rows are located between the central sprinkler 28 and the other one of the two side sprinklers 28.

The distribution network 34 comprises feeding lines 42 each feeding the sprinklers 28 of a respective sprinkler row 40 with washing solution and feeding valves 44 each controlling the flow of washing solution in a respective feeding line 42. The distribution network 34 comprises a distribution line 46 connected to the feeding lines 42 for feeding the feeding lines 42 with washing solution and a distribution valve 48 controlling flow of washing solution in the distribution line 46

A washing method of the invention comprises the steps of tilting the reflectors 10 about their respective axis with respect to a horizontal plane. The reflectors 10 are tilted at an angle of a few degrees, for example 5° to 15°, all in the same direction or some in a direction and some in the other direction.

The method further comprises the step of spreading a washing solution on the mirrors 14 of the reflectors 10 with the sprinklers 28 with rotating the heads 32 about their respective vertical axis.

The washing system may be controlled by the control system of the solar energy collector 2. The control system is configured to determine the performance of the solar energy collector 2 and a washing operation may be triggered when low performance is detected, for example when a performance indicia representative of the performance of the solar energy collector 2 passes below a washing threshold.

Alternatively or optionally, the washing operation is triggered manually by an operator or regularly.

The washing system 26 provides a good covering all the reflectors 10, namely the reflectors 10 of the central rows 8 remote from the sides of the solar energy concentrator 6. The washing system 26 allows an efficient cleaning of the mirrors 14 with a reduced amount of washing solution.

The washing system 26 is automated with avoids operation and maintenance. It avoids the need of spreading water from a water spreading truck going on the field.

Slightly tilting the reflectors assemblies during washing allows an efficient washing without washing solution staying on the mirror.

## Claims

1. A solar energy collector (2) comprising :
- a receiver (4) to circulate a heat transfer fluid,
- a solar energy concentrator (6) comprising rows (8) of reflectors (10) with mirrors (14) to concentrate solar energy on the receiver (4),
- a washing system (26) for washing the reflectors (10), said washing system comprising an array of sprinklers (28), said sprinklers (28) having in-ground bodies (30) and rotary heads (32) rotative with respect to axes (A-A) extending substantially vertically, to spread washing solution on substantially all mirrors (14) of the reflectors (10).

2. Solar energy collector as in claim 1, comprising external sprinklers (28) positioned at the perimeter of the solar energy concentrator (6).

3. Solar energy collector as in claim 2, wherein the head (32) of each external sprinkler is rotative to spread washing solution on a spreading zone in the shape of a half disc or a quarter disc.

4. Solar energy collector as in any preceding claim, comprising internal sprinklers (28) positioned between reflectors (10) of the solar energy concentrator (6).

5. Solar energy collector as in claim 4, wherein the head (32) of each internal sprinkler (28) is rotative to spread washing solution on a spreading zone in the shape of a disc.

6. Solar energy collector as in claim 4 or 5, wherein the spreading zone of each internal sprinkler (28) is overlapped by the spreading zones of at least four adjacent sprinklers, namely height adjacent sprinklers.

7. Solar energy collector as in any preceding claim, wherein the sprinklers (28) are arranged in a regular rectangular or square lattice comprising parallel rows (40) of sprinklers (28).

8. Solar energy collector as in any preceding claim, wherein the sprinklers (28) of each row (40) are spaced such that the spreading zones overlap and the rows (40) are interspaced such that the spreading zones of each pair of adjacent rows (40) overlap.

9. Solar energy collector as in any preceding claim, wherein the washing solution is demineralized water.

10. Method of washing reflectors of a solar energy collector (2) as in any preceding claim, comprising the steps of:
- tilting the reflectors (10) at an angle with respect to a horizontal plane; and
- spreading washing solution on substantially all mirrors (14) of the reflectors (10) with the washing system.
